# EUROPEAN PATENT SPECIFICATION

(11) **EP 4 496 481 B1**
(45) Date of publication and mention of the grant of the patent: **29.07.2026**
(21) Application number: 22734978.4
(22) Date of filing: 23.06.2022
(51) Int. Cl.: A23K 10/12, A23J 1/00, A23J 3/22, A23K 10/37, A23K 10/38, A23K 20/147, A23K 40/25

(54) **A FEED COMPOSITION**
FUTTERZUSAMMENSETZUNG
COMPOSITION D'ALIMENTS POUR ANIMAUX

(43) Date of publication of application: 29.01.2025
(73) Proprietor: Clonbio Group Ltd., D02 XE61 Dublin (IE)
(72) Inventor: TURLEY, Mark, D02 XE61 Dublin (IE)
(74) Representative: Viering, Jentschura & Partner mbB Patent- und Rechtsanwälte
(86) International application number: PCT/EP2022/067287
(87) International publication number: WO 2023/247051

(56) References cited:
- EP-B1- 3 164 410
- WO-A1-2020/092306
- WO-A1-2022/099047
- GB-A- 2 493 547
- US-A1- 2007 077 345
- US-A1- 2013 142 905
- US-B2- 9 066 531
- KYRIAKOPOULOU KONSTANTINA ET AL: "Functionality of Ingredients and Additives in Plant-Based Meat Analogues", FOODS, vol. 10, no. 3, 1 March 2021 (2021-03-01), CH, pages 600, XP055940246, ISSN: 2304-8158, DOI: 10.3390/foods10030600

## Description

The invention relates to a feed (food) composition, in particular to a protein-rich feed (food) composition useful as an additive in a human food and/or animal feed material, but also useful as a human food product and/or an animal feed product. In the following the term feed composition always includes the term food and vice versa, if not explicitly excluded.

Numerous attempts have been made in the past to provide such protein rich feed compositions. Corresponding patent applications refer - inter alia - to the recovery of proteins, e.g. from a distillation process.

EP3164410B1 discloses such a process, using the liquid residue that remains in a wash after distillation, the so-called "pot ale", often still featuring around 20% by weight proteins as dry matter, which then is allowed to settle before mechanical recovery.

GB2493547A also refers to a process for protein recovery, namely from an ethanol fermentation process, the process comprising: i) forming a mixture of a fermentable organic material and a fermentation agent such a yeast; ii) fermenting the mixture to produce ethanol; iii) recovering from the fermented mixture a stream rich in ethanol and a co-product stream comprising unfermented organic material, fermentation agent and an aqueous solution of dissolved solids; iv) separating the co-product stream to recover a stream rich in the unfermented organic material and a stream comprising the fermentation agent suspended in the aqueous solution; and v) separating the unfermented organic material stream so that at least part of the fiber in the unfermented organic material is removed from the unfermented organic material to leave a protein rich material.

A different process for recovering a protein-containing material is disclosed in EP2410869B1.

US 2013/142905 A1 discloses a bio-based process to produce high quality protein concentrate (HQPC) by converting plant derived celluloses into bioavailable protein via aerobic incubation, including the use of such HQPC so produced as a nutrient, including use as a fish meal replacement in aquaculture diets.

WO 2022/099047 A1 discloses an improved ingredient for animal feed produced from distillers grains using a tribo-electrostatic belt separation process.

US 2007/077345 A1 discloses high-protein food products made primarily from soy protein, wherein the products contain at least one additional protein and can be made by extrusion.

In terms of protein yield, all these methods are limited and do not allow commercially attractive products. According to Belyea et.al. ["Composition of corn and distillers dried grains with solubles from dry grind ethanol processing" published in Bioresource Technology 94 (2004) 293-298; online available on 1 June 2022 at www.sciencedirect.com] the protein content of DDGS (distillers dried grains with solubles) can range from 27-35%.

An important drawback is an insufficient texture within corresponding protein products. The texture (texturization, structure) of food or food compositions respectively is an important factor with respect to the acceptance by (human) consumers.

A definition of texture in food products and methods to define the texture in food products may be found in: https://www.sciencedirect.com/topics/food-science/food-texture?msclkid=a9f038a2d14011eca95e33c8ac5e749f; online available on 1 June 2022.

Although reliable standards to determine the texture of food products have not yet been made available, the following categories, based on human sensorics, are widely used [ref. Szczesniak, A., Classification of Textural Characteristics; Journal of Food Science 28, 981-985 (1965)] and have proven to be sufficiently accurate.

| Primary characteristics | |
|---|---|
| Hardness | soft→firm→hard |
| Cohesiveness | crumbly→chrunchy→brittle |
| Elasticity | plastic→elastic |
| Adhesiveness | sticky→tacky→gooey |
| Viscosity | thin→viscous |

| Secondary characteristics | |
|---|---|
| Brittleness | crumbly→chrunchy→brittle |
| Chewiness | tender→chewy→tough |
| Gumminess | short→mealy→pasty→gummy |

Another disadvantage of the known protein products is their rheological behaviour. When made up as a powder they can be used as an ingredient (additive) in other food preparations. While the dosage is arbitrary and may lead to under or over dosages, such protein products vary their rheological behaviour when mixed with a fluid characteristically, in particular due to their high fluid holding capacities, often larger than 5 times the weight of the solid material.

In light of this background, it is an object of the invention to provide a feed composition, rich in protein and presenting a favourable texturization to allow use of the product as such and/or as a substitute and/or ingredient and/or batch component in other food products. A favourable texturization includes a favourable hardness, chewiness and/or water holding capacity. A further target of the invention is to make the composition and its production method sustainable.

The present invention provides an extruded feed composition according to claim 1 and a process for the preparation of the extruded feed composition according to claim 11. Preferred embodiments are described in the dependent claims.

The invention is based on the following findings:
Sustainability can be achieved by adapting known methods and technologies. This reduces or even avoids the construction of new machinery, the exploitation and consumption of additional raw materials, the use of energy and associated emissions, etc. It may even avoid any direct landfill as far as by-products (or even wastes) of known production methods, which were disposed of in the past, can now be used for preparing a further product.

Therefore the invention starts from the idea to use a component, which is a by-product, a co-product, a residue and/or a waste (hereinafter commonly referred to as residue) of the fermentation of grain to produce a chemical, including the production of bio-ethanol. Such bio-ethanol production plants are operating reliably at various places. The term "grain" includes grains such as corn (maize), wheat, barley, triticale and rye as well as mixtures thereof.

According to prior art, mentioned above, the said protein containing residues of a fermentation plant typically present a small grain size (often with a d₅₀ value <1mm) or even a powder form (often with a d₅₀ value between 50 and 500µm), correspondingly a large surface area, which makes it difficult to prepare these proteins as suitable food bites with a required texture, in particular without using further additives like binders.

The invention makes two main approaches:
- Firstly, such protein containing residues require a second component to transfer the corresponding mixture into suitable foot bites with the desired and required texture.
- Secondly, these components must be brought into intimate physical contact to provide the desired texture.

The invention makes binders etc. dispensable, but adds a second component selected from proteins deriving directly from legumes, oilseed or both, wherein said second component consists of at least 50% by weight proteins (on a moisture free basis). Within the new composition the term legumes also covers oilseed or a mixture of both. Such protein components feature texturization capabilities that react synergistically with the (powder-like) residues (by-products) of a fermentation process.

The most important and surprising perception during the development of the new feed composition indeed was that the combination (mixture/blend) of these two components (first component, a residue of a grain fermentation, which first component consists of at least 50% by weight proteins; second component selected from legumes, which second component also consists of at least 50% by weight proteins) changes the texturization capability of both components within said mixture and during manufacturing of the final product dramatically in a favourable direction with respect to its intended use. Mechanical interactions between the "2 phases" (2 components), in other words: mechanical crosslinks between the two components can be generated to give the final product the desired texture. During intensive trials it was further observed that this synergistic behaviour (effect) is limited to certain percentages of the two components within the blend.

This effect is supported by a selection of technologies to blend (mix) the two components: Mixing with a common "hand blender" (immersion blender) allows the two components to be homogeneously distributed, the structure of the overall final product is better than in prior art mentioned but still relatively weak as is the density, hardness etc.. Significantly better results can be achieved if the distribution and contacting of the components are carried out on a pelletizing plate or an adequate pelletizing machine. Such pelletizing means are known in the art, although for different applications like pelletizing of ceramic materials.

Best results can be achieved with the help of an extruder. The starting materials (components) are typically fed into the extruder together with water and steam, then mixed and compacted along an extruder channel, often with the aid of a screw like feeding means, and the extruded, homogeneous mass is cut at the exit of the extruder channel. The size of the machine parts, the amount of water and steam, the rotational speed of the screw (spindle), thus the throughput rate and other machine and material parameters allow to adjust the "mixing process" in a customized manner. Accordingly the density of the extruded material, its texture, porosity etc. may be adjusted precisely and in a bespoke way.

The protein containing components (materials) may be treated within the extruder at temperatures above 100°C, above 150°C or even above 200°C. In particular at temperatures above 150°C the texturization capability between the protein containing components (ingredients) increases further.

The present invention is directed at an extruded feed composition. The extruded material stream can be further processed, e.g. by cutting means, by adding air into the product etc.

Reliable results were achieved with the first component of between 20% and 60% by weight and the second component of between 80% and 40% by weight, with both adding up to at least 95% by weight of the final food composition (the final product, always calculated on a moisture free basis).

Best results were based on the following parts per 100 parts final product [table1]:

| first component (by-product), each ≥ | Second component (protein), each ≤ |
|---|---|
| 25 | 75 |
| 30 | 70 |
| 35 | 65 |
| 40 | 60 |
| 45 | 55 |
| 40 | 60 |

At least one of the first component and the second component may be composed of more than one ingredient (residue, material). For example the first component can be composed of two or more ingredients taken from different process steps along one or more grain fermentation processes, for example as part of a bio-ethanol production line. A first component including yeast based proteins is preferred, wherein the yeast is also part of the fermentation process. Another option is to provide a mix of two or more different grain based proteins (having undergone a previous fermentation process) as a first component. Similarly the second component can be made of proteins deriving from two or more different legumes, for example soy and pea proteins.

Analysis by means of a microscope confirmed that the addition of the second component to the first component within the given ranges causes a dramatic change of texture within said blend. The two components act with each other as a texture modifier for the final food composition, while at the same time increasing hardness and chewiness.

By the addition of legume proteins mechanical bridges are built between adjacent grains of the first and second components, giving the overall product the desired textural and physical (including haptic) properties.

This change in structure is also responsible for a completely different water hydration of the products compared with powdery protein products following prior art and allows new and further preparations and applications.

The invention relates to an extruded feed composition featuring:
- an intimate blend of
- 20 to 60% by weight of a first component, being a residue or a by-product of a fermentation of grain, wherein a corresponding dry component of the first component has a protein content of at least 50% by weight of the dry component,
- 40 to 80% by weight of a second component, directly deriving from legumes, which second component comprises of at least 50% by weight proteins on a moisture free basis, wherein
- the first and second component
- add up to at least 95% by weight of the feed composition on a moisture free basis and
- are mechanically linked to each other, thereby creating a texturization within the feed composition and making it dimensionally stable.

The feed composition can be made-up as a dry product, a wet product or a product of medium moisture content.

A dry product is characterized by a solid structure and texture and a maximum moisture content of 10 parts by weight per 100 parts by weight of the (dry) solid components of the feed composition. The moisture content may be <5 parts by weight per 100 parts by weight of the solid components of the feed composition. In other words: A dry product has a moisture content of less than about 9% by weight, according to an embodiment of less than about 5% by weight.

A wet product is characterized by a soft (meat like) structure and texture and a minimum moisture content of 100 parts by weight (or even more than 130 parts by weight) per 100 parts by weight of the (dry) solid components of the feed composition. In other words: the moisture content of a wet product is higher than 50% by weight, according to an embodiment higher than 55% by weight and may be even higher than 60% by weight or 65% by weight.

A product of medium moisture content has a moisture content in between a dry and a wet product.

The upper and lower weight limits of the two components within the blend may be set in accordance with table 1.

The protein content of the first component can by much higher than 50% by weight, e.g. >60% by weight or >75% by weight, depending on the pre-treatment of the grain.

As known from prior art, the protein content of a so-called DDGS material is around 30% by weight.

This can be increased by additional treatments of a so-called thin-stillage within an ethanol production process (e.g. starting from corn). The thin stillage is a residue (by-product) of a known whole-stillage separation within a bio-ethanol plant [US9,066,531B2]. Such treatments include further separation steps of the thin stillage, e.g. a membrane filtration, and may further include a de-oiling step and/or a drying step and/or a pelletizing step.

These treatment means can raise the protein content of the corresponding dry component to 50% by weight or more, e.g. ≥53%, ≥55%, ≥60%, ≥65% (all by weight of the dry component).

This is an important advantage in various respects: it makes the overall bio-ethanol plant more effective, it allows the production of a high-value by-product at low costs, it allows new applications of the said by-product.

The second component is a legume product, which is available in the market as such and which features at least 50% by weight proteins. Typically it is made up as a dry powder. As an example: a soy protein characterizes the proteins of soy beans and can comprise products of high protein content, including, i.a., de-oiled soy flour, a so-called soy protein concentrate and/or a so-called soy protein isolate.

Many such plant proteins, in particular legume proteins, have substantially equivalent amino acid concentrations as animal proteins, which makes them even more attractive.

The new feed composition (food preparation) is based on the two components mentioned. It does not require any further additives like binders, colorants, tensides etc.. Insofar the two components may add up to 100% by weight of the final composition and so be considered a "clean label" alternative protein product.

Nevertheless the invention does not exclude small parts of other ingredients like vitamins, inert additives like perlite, vermiculite, impurities etc. or flavorings, in particular those which do not influence the desired overall behaviour of the new composition (formulation, product, texture) in a negative way and/or adds substances of different mechanism.

Typically the percentage of such optional additives will not exceed 5% by weight, in other preferred embodiment being ≤4%, ≤3%, ≤2%, ≤1% by weight (all based on the dry final product).

Based on these two components the feed composition may comprise one or more of the following amino-acids:
aspartic acid, threonine, serine, glutamic acid, proline, glycine, alanine, cysteine, valine, methionine, isoleucine, leucine, tyrosine, phenylalanine, histidine, lysine, arginine.

The final product can be prepared in different make-ups, as a bar, a pop-corn like material, a granola-type product, a meat-like product etc., all featuring the favourable texturization.

Corn and/or barley are preferred as a first component due to its availability, price, regrowing properties and - in particular - its protein content.

For similar reason the second component is selected - for example - from a group comprising soy and pea, or both, although potatoes etc. may also serve as a basis for said second component.

As mentioned above the texture of the final product is decisive, wherein the following data may be achieved within a new product:
- hardness [N]: > 10
- adhesiveness [mJ]: 0,01-0,3
- springiness [ratio]: >0,9
- chewiness [mJ]: > 50

The feed composition may feature a bulk density of between 150kg and 250kg per cubic meter of the (dry) feed composition, with densities between 150 and 200kg per cubic meter may be fine.

The water holding capacity (wherein water stands for any type of a fluid/liquid) of the final product is an important feature with respect to its use.

Common protein products feature a water holding capacity of more than 6 times the weight of the solid material. This limits their use and applications in many ways.

The new formulation (feed composition) reduces the amount of water absorbed by the product dramatically; with less than 4 parts by weight fluid (in particular water) per part of the final product. Relations of <1:3, <1:2,5, <1:2,2, even <1:2 are achievable, depending on the particle size and respective amounts of the two components.

The moisture content of the final product can be set as required. Reference is made to the corresponding description above.

The new product allows various preparations: As examples it can feature a popcorn-like structure with a high total porosity (open and closed pores), e.g. of more than 50% by volume, as well as a more dense, but chewy texture (similar to meat); pasta-like make-ups with moisture contents of around 2-4%by weight are also within the scope.

Further features of the invention may be derived from the claims as well as the other application documents. These features may be combined in any way if not explicitly excluded or technically unreasonable.

This includes an embodiment wherein proteins within the food composition derive from yeast which was used during a previous fermentation of the first component.

## Claims

1. An extruded feed composition featuring
1.1 an intimate blend of
1.1.1 20 to 60% by weight of a first component, being a residue or a by-product of a fermentation of grain, wherein a corresponding dry component of the first component has a protein content of at least 50% by weight of the dry component,
1.1.2 40 to 80% by weight of a second component, directly deriving from legumes, which second component comprises at least 50% by weight proteins on a moisture free basis, wherein
1.2 the first and second component
1.2.1 add up to at least 95% by weight of the feed composition on a moisture free basis and
1.2.2 are mechanically linked to each other, thereby creating a texturization within the feed composition and making it dimensionally stable.

2. The feed composition of claim 1, providing a solid structure and a maximum moisture content of 10 parts by weight per 100 parts by weight of the solid components of the feed composition.

3. The feed composition of claim 1, providing a soft structure and a minimum moisture content of 100 parts by weight per 100 parts by weight of the solid components of the feed composition.

4. The feed composition of claim 1 comprising at least one of the following components: the first component being a residue or a by-product of a fermentation of barley, wheat, or both, the second component is selected from a group comprising soy, pea, or both.

5. The feed composition of claim 1 with at least one texturizing feature of a group comprising:
5.1 hardness [N]: > 10
5.2 adhesiveness [mJ]: 0,01-0,3
5.3 springiness [ratio]: >0,9
5.4 chewiness [mJ]: > 50

6. The feed composition of claim 1, featuring a bulk density of between 150kg and 250kg per cubic meter of the feed composition.

7. The feed composition of claim 1, featuring a water holding capacity of less than 4g water per 1 gram of the feed composition.

8. The feed composition of claim 1, made up as a popcorn-like structure with a total porosity of more than 50% by volume.

9. The feed composition of claim 1, made up as a meat-like structure with a moisture content of more than 55% by weight of the total feed composition.

10. The feed composition of claim 1, comprising proteins deriving from yeast which was used during fermentation of the first component.

11. A process for the preparation of an extruded feed composition according to claim 1, the process comprising:
(i) a step of feeding starting material comprising the first and second component into an extruder together with water and steam,
(ii) a step of mixing and compacting along an extruder channel, and
(iii) a step of cutting an extruded homogenous mass at an exit of the extruder, wherein protein containing components are treated within the extruder at temperatures of above 150°C.

## Patentansprüche

1. Extrudierte Futterzusammensetzung, aufweisend:
1.1 eine innige Mischung von
1.1.1 20 bis 60 Gew.-% einer ersten Komponente, bei der es sich um einen Rückstand oder ein Nebenprodukt einer Getreidefermentation handelt, wobei eine entsprechende trockene Komponente der ersten Komponente einen Proteingehalt von mindestens 50 Gew.-% aufweist, basierend auf dem Trockengewicht der Komponente,
1.1.2 40 bis 80 Gew.-% einer zweiten Komponente, die direkt von Hülsenfrüchten stammt, wobei die zweite Komponente mindestens 50 Gew.-% Proteine auf einer feuchtigkeitsfreien Basis aufweist,
wobei
1.2 die erste und zweite Komponente
1.2.1 mindestens 95 Gew.-% der Futterzusammensetzung auf einer feuchtigkeitsfreien Basis ergeben und
1.2.2 mechanisch miteinander verbunden sind, wodurch eine Texturierung innerhalb der Futterzusammensetzung erzeugt und diese formstabil gemacht wird.

2. Futterzusammensetzung gemäß Anspruch 1, welche eine feste Struktur und einen maximalen Feuchtigkeitsgehalt von 10 Gewichtsteilen pro 100 Gewichtsteile der festen Komponenten der Futterzusammensetzung bereitstellt.

3. Futterzusammensetzung gemäß Anspruch 1, welche eine weiche Struktur und einen minimalen Feuchtigkeitsgehalt von 100 Gewichtsteilen pro 100 Gewichtsteile der festen Komponenten der Futterzusammensetzung bereitstellt.

4. Futterzusammensetzung gemäß Anspruch 1, aufweisend mindestens eine der folgenden Komponenten: die erste Komponente, welche ein Rückstand oder ein Nebenprodukt einer Fermentation von Gerste, Weizen oder beidem ist, die zweite Komponente, welche aus einer Gruppe ausgewählt ist, die Soja, Erbse oder beides umfasst.

5. Futterzusammensetzung gemäß Anspruch 1 mit mindestens einem Texturierungsmerkmal aus einer Gruppe, aufweisend:
5.1 Härte [N]: > 10
5.2 Klebrigkeit [mJ]: 0,01-0,3
5.3 Elastizität [Verhältnis]: > 0,9
5.4 Kaufestigkeit [mJ]: > 50

6. Futterzusammensetzung gemäß Anspruch 1, aufweisend eine Schüttdichte zwischen 150 kg und 250 kg pro Kubikmeter der Futterzusammensetzung.

7. Futterzusammensetzung gemäß Anspruch 1, aufweisend eine Wasseraufnahmekapazität von weniger als 4 g Wasser pro 1 Gramm der Futterzusammensetzung.

8. Futterzusammensetzung gemäß Anspruch 1, hergestellt als Popcorn-artige Struktur mit einer Gesamtporosität von mehr als 50 Vol.-%.

9. Futterzusammensetzung gemäß Anspruch 1, hergestellt als fleischartige Struktur mit einem Feuchtigkeitsgehalt von mehr als 55 Gew.-%, basierend auf der Gesamt-Futterzusammensetzung.

10. Futterzusammensetzung gemäß Anspruch 1, aufweisend Proteine, die von Hefe stammen, welche während der Fermentation der ersten Komponente verwendet wurde.

11. Verfahren zur Herstellung einer extrudierten Futterzusammensetzung gemäß Anspruch 1, wobei das Verfahren aufweist:
(i) einen Schritt des Zuführens von Ausgangsmaterial, das die erste und die zweite Komponente aufweist, zusammen mit Wasser und Dampf in einen Extruder,
(ii) einen Schritt des Mischens und Verdichtens entlang eines Extruder-Kanals und
(iii) einen Schritt des Schneidens einer extrudierten homogenen Masse an einem Ausgang des Extruders,
wobei proteinhaltige Komponenten innerhalb des Extruders bei Temperaturen von über 150 °C behandelt werden.

## Revendications

1. Composition alimentaire extrudée comprenant :
1.1 un mélange intime de
1.1.1 20 à 60 % en poids d'un premier composant, qui est un résidu ou un sous-produit d'une fermentation de céréales, dans laquelle un composant sec correspondant du premier composant présente une teneur en protéines d'au moins 50 % en poids du composant sec,
1.1.2 40 à 80 % en poids d'un deuxième composant, dérivant directement de légumineuses, lequel deuxième composant comprend au moins 50 % en poids de protéines sur une base sans humidité, dans laquelle
1.2 les premier et deuxième composants
1.2.1 s'élèvent jusqu'à au moins 95 % en poids de la composition alimentaire sur une base sans humidité et
1.2.2 sont liés mécaniquement l'un à l'autre, créant ainsi une texturation au sein de la composition alimentaire et lui conférant une stabilité dimensionnelle.

2. Composition alimentaire selon la revendication 1, fournissant une structure solide et une teneur en humidité maximale de 10 parties en poids pour 100 parties en poids des composants solides de la composition alimentaire.

3. Composition alimentaire selon la revendication 1, fournissant une structure molle et une teneur en humidité minimale de 100 parties en poids pour 100 parties en poids des composants solides de la composition alimentaire.

4. Composition alimentaire selon la revendication 1, comprenant au moins l'un des composants suivants : le premier composant étant un résidu ou un sous-produit d'une fermentation d'orge, de blé ou des deux, le deuxième composant étant choisi dans un groupe comprenant le soja, les pois ou les deux.

5. Composition alimentaire selon la revendication 1, présentant au moins une caractéristique de texturation choisie parmi un groupe comprenant :
5.1 dureté [N] : > 10
5.2 adhésivité [mJ] : 0,01-0,3
5.3 élasticité [rapport] : > 0,9
5.4 texture moelleuse [mJ] : > 50

6. Composition alimentaire selon la revendication 1, présentant une densité apparente comprise entre 150 kg et 250 kg par mètre cube de la composition alimentaire.

7. Composition alimentaire selon la revendication 1, présentant une capacité de rétention d'eau inférieure à 4 g d'eau par 1 gramme de composition alimentaire.

8. Composition alimentaire selon la revendication 1, constituée comme une structure de type pop-corn avec une porosité totale supérieure à 50 % en volume.

9. Composition alimentaire selon la revendication 1, constituée comme une structure de type viande avec une teneur en humidité supérieure à 55 % en poids de la composition alimentaire totale.

10. Composition alimentaire selon la revendication 1, comprenant des protéines issues de la levure utilisée lors de la fermentation du premier composant.

11. Procédé de préparation d'une composition alimentaire extrudée selon la revendication 1, le procédé comprenant :
(i) une étape d'introduction d'une matière de départ comprenant les premier et deuxième composants dans une extrudeuse, conjointement avec de l'eau et de la vapeur,
(ii) une étape de mélange et de compactage le long d'un canal d'extrusion, et
(iii) une étape de découpe d'une masse homogène extrudée à une sortie de l'extrudeuse, où les composants contenant des protéines sont traités à l'intérieur de l'extrudeuse à des températures supérieures à 150 °C.
